# EUROPEAN PATENT APPLICATION

(11) **EP 3 842 929 A1**
(43) Date of publication of application: **30.06.2021**
(21) Application number: 19865354.5
(22) Date of filing: 10.07.2019
(51) Int. Cl.: G06F 8/38

(54) **METHOD AND APPARATUS FOR PROCESSING STRUCTURED DATA, AND STORAGE MEDIUM AND ELECTRONIC DEVICE**

(30) Priority: 29.09.2018 CN 201811152477
(71) Applicant: GUANGDONG OPPO MOBILE TELECOMMUNICATIONS CORP., LTD., Dongguan Guangdong 523860 (CN)
(72) Inventor: LI, Senlin, Dongguan, Guangdong 523860 (CN)
(74) Representative: Manitz Finsterwald Patent- und Rechtsanwaltspartnerschaft mbB
(86) International application number: PCT/CN2019/095439
(87) International publication number: WO 2020/063031

(57) **Abstract**

Disclosed is a method for processing structured data. The method includes: obtaining document object model tree of a native page in response to receiving a display instruction of the native page, the document object model tree includes dynamic nodes and static nodes; traversing nodes of the document object model tree and converting the static nodes to target nodes; generating a virtual node by integrating the target nodes, and loading the virtual node into the document object model tree; and controlling a rendering engine to parse the loaded document object model tree and generate the native page.

## Description

The present application claims priority of Chinese Patent Application No. 201811152477.6, filed on September 29, 2018 in the China National Intellectual Property Administration, the entire contents of which are hereby incorporated by reference.

### TECHNICAL FIELD

The present disclosure generally relates to information processing technology, and in particular to a processing method of structured data, an apparatus, a storage medium and an electronic device.

### BACKGROUND

As the development of electronic technology, the function of electronic devices and cell phones has become more and more powerful. A user can browse the native page of an application through various fast application programs, such as text information, image information, audio information and cards information etc.

Currently, when a native page is generated through a fast application program on the phone, it is necessary to invoke a rendering engine in the application to parse and render the fast application codes corresponding to the fast application components. The fast application components are stored in the configuration of document object model tree. Each fast application component is taken as one node of the document object model tree. Since the content of a native page is becoming more and more complicated, the number of levels of the corresponding document object model tree is becoming higher and higher, and thus the rendering period is becoming longer and longer.

### SUMMARY

Accordingly, the present disclosure provides a processing method for structured data, an apparatus, a storage medium and an electronic device, which may reduce the complexity of levels of the structured data and improve the rendering efficiency of the structured data.

In an aspect, a processing method for structured data is provided. The method includes: obtaining document object model tree of a native page in response to receiving a display instruction of the native page, wherein the document object model tree comprises dynamic nodes and static nodes; traversing nodes of the document object model tree and converting the static nodes to target nodes; generating a virtual node by integrating the target nodes, and loading the virtual node into the document object model tree; controlling a rendering engine to parse the loaded document object model tree and generate the native page.

In another aspect, a processing apparatus for structured data is provided. The apparatus includes: an obtaining unit, configured to obtain corresponding document object model tree of the native page in response to receiving a display instruction of the native page, wherein the document object model tree comprises dynamic nodes and static nodes; a converting unit, configured to traverse nodes of the document object model tree and convert the static nodes into target nodes; a integrating unit, configured to integrate the target nodes to generate a virtual node, and load the virtual node into the document object model tree; and a parsing unit, configured to parse the document object model tree after the virtual node is uploaded through a rendering engine to generate the native page.

In yet another aspect, a non- transitory computer readable storage medium is provided. The non- transitory computer readable storage medium is configured to store computer programs. The computer programs, when executed on a computer, implements the processing method for structured data of any one of the embodiments of the present disclosure.

In another aspect, an electronic device is provided. The electronic device includes a memory and a processor. The processor is configured to execute computer programs stored in the memory to perform following operations: obtaining document object model tree of a native page in response to receiving a display instruction of the native page, wherein the document object model tree comprises dynamic nodes and static nodes; traversing nodes of the document object model tree and converting the static nodes to target nodes; generating a virtual node by integrating the target nodes, and loading the virtual node into the document object model tree; controlling a rendering engine to parse the loaded document object model tree and generate the native page.

### BRIEF DESCRIPTION OF THE DRAWINGS

In order to clearly explain the technical solutions and their beneficials in the embodiments of the present disclosure, the drawings used in the description of the embodiments will be briefly described below.
FIG. 1 illustrates a flow chart of a processing method for structured data according to an embodiment of the present disclosure.
FIG. 2 illustrates a flow chart of a processing method for structured data according to another embodiment of the present disclosure.
FIG. 3 shows an illustrative scenario of a processing method for structured data according to an embodiment of the present disclosure.
FIG. 4 shows a schematic diagram of a processing apparatus for structured data according to an embodiment of the present disclosure.
FIG. 5 shows a schematic diagram of a processing apparatus for structured data according to another embodiment of the present disclosure.
FIG. 6 is a schematic diagram of an electronic device according to an embodiment of the present disclosure.
FIG. 7 is a schematic diagram of an electronic device according to another embodiment of the present disclosure.

### DETAILED DESCRIPTION

Referring to the drawings, wherein the same reference numerals refer to the same components, the principles of the disclosure are illustrated in the context of a suitable computing environment. The following description is based on the specific embodiments of the disclosure and should not be construed as limiting of the disclosure.

The term "module" as used herein may be taken to mean a software object that is executed on the computing system. The different components, modules, engines, and services described herein can be considered as implementation objects on the computing system. The apparatus and method herein are preferably implemented in software, and may of course be implemented in hardware, all of which are within the scope of the present disclosure.

Various embodiments of the present disclosure will be explained in detail below.

In these embodiments, a processing apparatus for structured data will be described. The processing apparatus for structured data may be integrated in an electronic device such as cellphone, laptop, personal digital assistance (PDA) and so on.

According to an embodiment of the present disclosure, a processing method for structured data is provided. The method includes the following operations.

When a display instruction of a native page is received, corresponding document object model tree of the native page is obtained. The document object model tree includes dynamic nodes and static nodes.

Nodes of the document object model tree are traversed, and the static nodes are converted to target nodes.

The target nodes are integrated to generate a virtual node. The virtual node is loaded into the document object model tree.

After the virtual node is loaded, the document object model tree is parsed through a rendering engine to generate the native page.

In one embodiment, the operation of traversing the nodes of the document object model tree and converting the static nodes into the target nodes may include: traversing the nodes of the document object model tree based on a preset rule; determining whether a currently traversed node is a dynamic node or a static node; accessing sub-nodes of the currently traversed node in response to determining the currently traversed node is the dynamic node; converting the currently traversed node into a target node in response to determining that the currently traversed node is the static node.

In one embodiment, the operation of converting the currently traversed node into a target node may include: obtaining the currently traversed node and the sub-nodes of the currently traversed node; and integrating the sub-nodes of the currently traversed node into the currently traversed node, and converting integrated currently traversed node into the target node.

In one embodiment, the operation of traversing the nodes of the document object model tree based on the preset rule may include: starting the traversing from a root node of the document object model tree, and traversing the nodes of the document object model tree based on a top-to-down rule.

In one embodiment, the operation of starting the traversing from the root node of the document object model tree and traversing the nodes of the document object model tree based on the top-to-down rule may include: starting the traversing from the root node of the document object model tree; traversing the nodes of the document object model tree based on an order of traversing sibling nodes in a same level and traversing sibling nodes in a lower level.

In one embodiment, the operation of integrating the target nodes to generate the virtual node, and uploading the virtual node into the document object model tree may include: rendering the target nodes to generate a plurality of target components; generating a virtual component by integrating the plurality of the target components, and loading the virtual node based on the virtual component into the document object model tree.

In one embodiment, before the operation of obtaining the corresponding document object model tree of the native page, the method may further include: adding one of a specific tag, an attribute or a specific name to each the node of the document object model tree and determining the node is a static nodes or a dynamic node based on the specific tag, the attribute or the specific name.

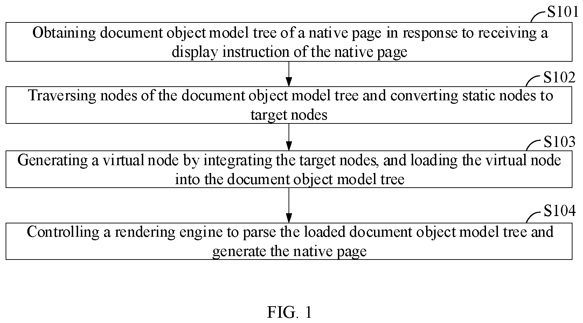

FIG. 1 shows a processing method for structured data according to an embodiment of the present disclosure. The method may include operations described in the following blocks S101-S104.

At block S101, in response to receiving a display instruction of the native page, corresponding document object model tree of the native page is obtained.

It should be noted, the native page refers to the application native page displayed through opening a fast application. The fast application refers to an application which the user does not need to download and installed, and may use it by clicking. In this way, the user can easily enjoy the performance and experience of the native application in real time, and the storage space of the electronic device may be saved so as to "slim" the electronic device.

The native page may be composed of several components such as text component, image component, horizontal arrangement component, vertical arrangement component, video component and so on. More details about the different components may be found in W3C document object model (DOM) standard which defines the composition of a native page. Each component may be taken as a node, and all the nodes may form a tree-shape. The tree-shape is the document object model tree. The document object model tree includes dynamic nodes and static nodes. In this implementation, when the user performs the operation of opening the native page, the electronic device may generate and receive a display instruction of the native page, and then download the corresponding document object model tree of the native page.

At block S102: The nodes of the document object model tree are traversed, and the static nodes are converted in to target nodes.

The document object model tree includes multiple nodes. Each node corresponds to a component which maps corresponding a variable function. When the parameter of the variable function changes, the component automatically updates based on the parameter. In a website, the component content normally includes some changeable parts and some constant parts. The constant parts correspond to static variable functions, and the corresponding nodes are static nodes. The changeable parts correspond dynamic variable functions, and the corresponding nodes are dynamic nodes.

Since the content in the static nodes do not change, the static nodes can be integrated so as to reduce the depth (number of levels) of the document object model tree and improve post-rendering speed. Therefore, the nodes of the document object model tree are traversed one by one, and the static nodes which correspond to static variable functions are converted into target nodes.

In one embodiment, a specific tag, an attribute or a specific name may be added for each component. In this way, the electronic device may rapidly identify whether the component is a static component or a dynamic component based on the tag, the attribute or the specific name.

In some embodiments, the operation of traversing the nodes of the document object model tree and converting the static nodes into target nodes may include the following operations.
(1) The nodes of the document object model tree are traversed based on a preset rule.
(2) It is determined whether a currently traversed node is a dynamic node.
(3) When it is determined that the currently traversed node is the dynamic node, the sub-nodes of the currently traversed node are accessed.
(4) When it is determined that the currently traversed node is not the dynamic node, the currently traversed node is converted into a target node.

In some embodiments, the nodes of the document object model tree may be traversed one by one based on a top-to-down rule. Whether the currently traversed node is a dynamic node may be determined based on whether the parameter(s) of the variable function of the component on the node is changeable. When the corresponding variable of the component on the node is changeable, it can be determined that the currently traversed node is a dynamic node, and the sub-nodes of the currently traversed node may be automatically accessed. When the corresponding variable of the component on the node is constant, it can be determined that the currently traversed node is a static node, and the currently traversed node may be converted into a target node.

In some embodiments, the operation of converting the currently traversed node into a target node may include the following operations.
(1.1) The currently traversed node and its sub-nodes are obtained.
(1.2) The sub-nodes are integrated into the currently traversed node, and the integrated node is converted into a target node.

Sub-nodes of a static node are always static nodes. Thus, when it is determined that the currently traversed node is a static node, the currently traversed node and its sub-nodes can be obtained, the sub-nodes can be integrated into the currently traversed node, and the integrated node may be converted into a target node. According to this embodiment, the sub-nodes of the static nodes are automatically integrated into their parent-nodes, their traversing time can be reduced which improves the overall traversing efficiency.

In some embodiments, the operation of traversing the nodes of the document object model tree based on the preset rule may include: starting the traversing from a root node of the document object model tree, and traversing the nodes of the document object model tree based on a top-to-down rule.

In some embodiments, the traversing may be started from the root node of the document object model tree. The nodes of the document object model tress may be traversed based on a rule according to which sibling nodes located in a same level are traversed before sibling nodes located in a lower level are traversed.

At block S103, the target nodes are integrated to generate a virtual node, and the virtual node is loaded into the document object model tree.

Since the target nodes are all static nodes and the parameter(s) of their variable functions are constant, the target nodes may be integrated to generate a virtual node. The virtual node may be loaded into the document object model tree. In this way, the node complexity of the document object model tree may be reduced, and the post-rendering efficiency may be improved.

In some embodiments, the operation of integrating the target nodes to generate the virtual node and uploading the virtual node into the document object model tree may include the following operations.
(1) The target nodes are rendered to generate multiple target components.
(2) The target components are integrated to generate a virtual component. The virtual node may be generated based on the virtual component and be uploaded into the document object model tree.

In this embodiment, the multiple target nodes are rendered to generate multiple target components corresponding to multiple target nodes. The multiple target components are integrated to generate a virtual component including the multiple target components. Then, the virtual component may be uploaded into the document object model tree.

At block S104, after the virtual component is loaded, the document object model tress is parsed by controlling a rendering engine and generate the native page.

The rendering engine is in responsible of parsing the fast application and the component draw function. In one embodiment, the rendering engine may use the JavaScript language frame. JavaScript is a network script language and widely used in web application development. It usually serves to add various dynamic functions for a website and provide smooth and cosmetic browsing effect for users.

Further, the updated document object model tree may be parsed and rendered through the rendering engine on the electronic device, and the components may be drawn one by one on a display interface to generate the native page. Since the virtual node includes a set of multiple components, it can be called only once during the parsing and rendering process to directly generate and draw multiple components. Therefore, the rendering period and communication number can be largely reduced.

As described above, the present disclosure provides a processing method for structured data. The method includes: obtaining corresponding document object model tree of the native page in response to receiving a display instruction of the native page; traversing nodes of the document object model tree and converting the static nodes into target nodes; integrating the target nodes to generate a virtual node, and uploading the virtual node into the document object model tree; and parsing the document object model tree after the virtual node is uploaded through a rendering engine to generate the native page. According to the present disclosure, the static nodes of the document object model tree which corresponds to the native page may be determined, converted and integrated to generate a virtual node which further be uploaded into the document object model tree. Therefore, the level complexity of the document object model tree may be reduced and the rendering efficiency of the structured data may be improved.

The method described in the above embodiments will may further explained in detail below.

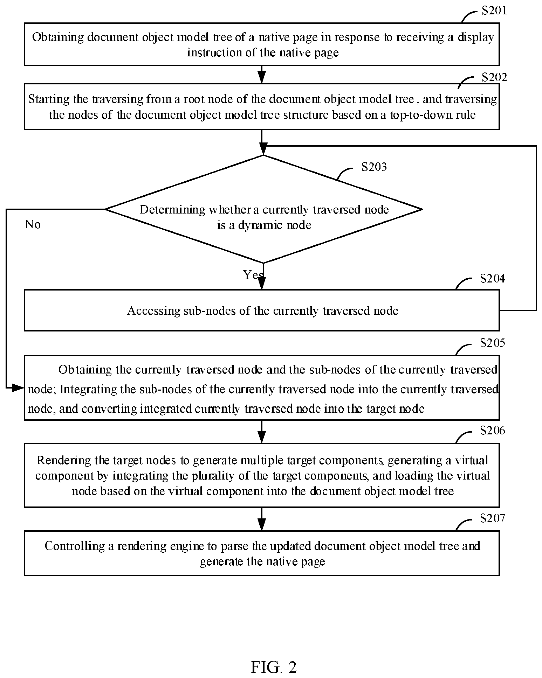

FIG. 2 illustrates a processing method for structured data according to another embodiment of the present disclosure.

Specifically, the method may include operations described in the following blocks S201-S207.

At block S201, in response to receiving a display instruction of the native page, corresponding document object model tree of the native page is obtained.

To better explain the present embodiment, a cellphone will be taken for illustrative purpose.

When detecting that the user opens a fast application, the cellphone automatically generates a display instruction of the native page, then download and obtain the corresponding document object model tree of the native page. The document object model tree includes dynamic nodes and static nodes.

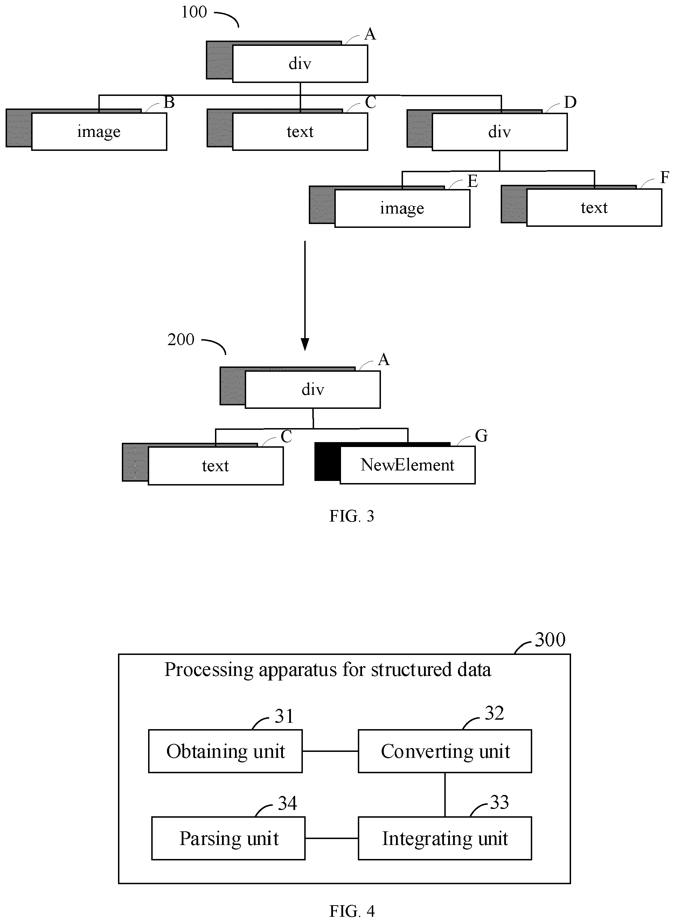

For example, as shown in FIG. 3, when the cellphone receives the display instruction of the native page, it downloads the corresponding document object model tress structure 100 of the native page. The document object model tree 100 includes Node A, Node B, Node C, Node D, Node E and Node F.

At block S202, traversing is started from the root node of the document object model tree, and the nodes of the document object model trees structure are traversed one by one based on a top-to-down rule.

That is, the cellphone starts the traversing operation with the root node of the document object model tree, and sequentially travers all the nodes of the document object model tree based on the top-to-down rule.

For example, as shown in FIG. 3, the cellphone may start the traversing operation with the root node A, and then sequentially traverses Node A, Node B, Node C, Node D, Node E and Node F one by one based on the top-to-down rule.

At block S203, it is determined whether the currently traversed node is a dynamic node or a static node.

The cellphone identifies whether the currently traversed node is a dynamic node based on whether the corresponding component of the currently traversed node has dynamic variable function. When the corresponding component of the currently traversed node has dynamic variable function, it is determined that the currently traversed node is a dynamic node and block S204 may be performed. When the corresponding component of the currently traversed node does not have dynamic variable function, it is determined the currently traversed node is not a dynamic node, and block S205 is performed.

For example, as shown in FIG. 3, the cellphone determines that Node A and Node C are dynamic nodes.

At block S204, sub-nodes of the currently traversed node are accessed.

When it is determined that the currently traversed node is a dynamic node, the sub-nodes of the currently traversed node are automatically accessed. Block S203 is then re-performed to determine whether each sub-node is a dynamic node.

At block S205, the currently traversed node and its sub-nodes are obtained. The sub-nodes are integrated into the currently traversed node, and integrated node is converted into a target node.

When it is determined that the currently traversed node is not a dynamic node, it proves the currently traversed node is a static node. Since the sub-nodes of a static node are always static nodes, the currently traversed node and its sub-nodes can be automatically obtained, the sub-nodes can be integrated into the currently traversed parent node, and the updated currently traversed node can be converted into a target node.

For example, as shown in FIG. 3, when it is determined Node B is a static node, Node B is directly converted into a target node since Node B is a tail node. The traversing operation is then continued. When it is determined that Node D is a static node, the sub-nodes Node E and Node F of Node D may be integrated into their parent node, Node D. Then, the updated Node D can be used to generate a target node.

At block S206, the target nodes are rendered one by one to generate multiple target components. The target components are integrated to generate a virtual component. The virtual component is used to generate a virtual node and uploaded to the document object model tree.

Specifically, the cellphone renders the target nodes one by one, generates the corresponding target components of the target nodes, integrates the target components to generate a virtual component including the target components, generates a virtual node based on the virtual component, and uploads the virtual component into the document object model tree.

For example, the cellphone renders the target node converted from Node B to generate an image component 1. The cellphone also renders the target node converted from updated Node D to generate a hybrid component 2 including image and text information. Based on arrangement rule, the cellphone then integrates the image component 1 and the hybrid component 2 to generate a virtual component including these two components, generates a virtual Node G based on the virtual component, and uploads the virtual Node G into the document object model tree to acquire the updated document object model tree 200. It can be seen, the number of levels of the updated document object model tree 200 is significantly less than the original document object model tree 100.

At block S207, the updated document object model tree is parsed to generate the native page.

Specifically, the updated document object model tree is parsed through the rendering engine integrated in the cellphone. Each node is parsed, forms a corresponding component, and is rendered into the display interface to generate the native page.

For example, the updated document object model tree 200 is parsed through the JavaScript language frame integrated in the cellphone. Based one Node C, an image component is generated. Based on virtual Node G, a virtual component including multiple components are formed. The image component and the virtual component are drawn in the display interface according to their location attributes to generate the native page. Since the number of levels of the updated document object model tree 200 is significantly less than that of the original document object model tree 100, communication calls during the parsing executed by the rendering engine can be reduced, which may significantly reduce the rendering period.

As described above, the present disclosure provides a processing method for structured data. The method includes: when receiving a display instruction of a native page, obtaining corresponding document object model tree of the native page; starting traversing from the root node of the document object model tree, and traversing the nodes of the document object model tree one by one based on a top-to-down rule; integrating the static nodes and their sub-nodes and converting the static nodes into target nodes; rendering the target nodes to generate corresponding target components, and integrating the target components to generate a virtual component; generating a virtual node based on the virtual component and uploading the virtual node into the document object model tree; parsing the updated document object model tress structure through the rendering engine to generate the native page. According to the present disclosure, the static nodes of the document object model tree which corresponds to the native page may be determined, converted and integrated to generate a virtual node which further be uploaded into the document object model tree. Therefore, the level complexity of the document object model tree may be reduced and the rendering efficiency of the structured data may be improved.

In order to better implement the processing method for structured data provided in the above embodiments of the present disclosure, the present disclosure further provides an apparatus based on the above processing method for structured data. The definition of relevant terms is similar to that described in the processing methods for structured data. Detailed explanation of these terms can be found in the above embodiments of the processing method.

According to the present disclosure, a processing apparatus for structured data is provided. The processing apparatus may include: an obtaining unit, configured to, when receiving a display instruction of a native page, obtain corresponding document object model tree of the native page, wherein the document object model tree includes dynamic nodes and static nodes; a converting unit, configured to traverse nodes of the document object model tree and convert the static nodes into target nodes; a integrating unit, configured to integrate the target nodes to generate a virtual node, and upload the virtual node into the document object model tree; and a parsing unit, configured to parse the document object model tree after the virtual node is uploaded through a rendering engine to generate the native page.

In one embodiment, the converting unit may include: a traversing sub-unit, configured to traverse the nodes of the document object model tree based on a preset rule; a determining sub-unit, configured to determine whether a currently traversed node is a dynamic node; an accessing sub-unit, configured to, when it is determined that the currently traversed node is the dynamic node, access sub-nodes of the currently traversed node; and a converting sub-unit, configured to, when it is determined that the currently traversed node is not the dynamic node, convert the currently traversed node into a target node.

In one embodiment, the converting sub-unit is specifically configured to: obtain the currently traversed node and the sub-nodes of the currently traversed node; and integrate the sub-nodes of the currently traversed node into the currently traversed node, and convert integrated currently traversed node into a target node.

In one embodiment, the traversing sub-unit is specifically configured to: start the traversing from a root node of the document object model tree; and traverse the nodes of the document object model tree based on a rule according to which the sibling nodes of the document object model tree located in a same level are traversed before the sibling nodes of the document object model tree located in a lower level are traversed.

In one embodiment, the processing apparatus further include a marking unit. The marking unit is configured to add a specific tag, an attribute or a specific name for each of the nodes of the document object model tree as marks such that the nodes are determined as static nodes or dynamic nodes based on the specific tag, the attribute or the specific name.

FIG. 4 shows a schematic diagram of a processing apparatus according to an embodiment of the present disclosure. Specifically, the processing apparatus 300 may include an obtaining unit 31, a converting unit 32, a integrating unit 33 and a parsing unit 34.

The obtaining unit 31 is configured to, when receiving a display instruction of a native page, obtain corresponding document object model tree of the native page. The document object model tree includes dynamic nodes and static nodes.

Specifically, the native page may be composed of several components such as text component, image component, horizontal arrangement component, vertical arrangement component, video component and so on. More details about the different components may be found in W3C document object model (DOM) standard which defines the composition of a native page. Each component may be taken as a node, and all the nodes may form a tree-shape structure. In this implementation, when the user performs the operation of opening the native page, the obtaining unit 31 may generate and receive a display instruction of the native page, and then download the corresponding document object model tree of the native page.

The converting unit 32 is configured to traverse the nodes of the document object model tree and convert static nodes into target nodes.

The document object model tree includes multiple nodes. Each node corresponds to a component which maps corresponding a variable function. When the parameter of the variable function changes, the component automatically updates based on the parameter. In a website, the component content normally includes some changeable parts and some constant parts. The constant parts correspond to static variable functions, and the corresponding nodes are static nodes. The changeable parts correspond dynamic variable functions, and the corresponding nodes are dynamic nodes.

Since the content in the static nodes do not change, the converting unit 32 may integrate the static nodes so as to reduce the depth (number of levels) of the document object model tree and improve post-rendering speed. Therefore, the converting unit 32 may traverse the nodes of the document object model tree one by one, and convert the static nodes which correspond to static variable functions into target nodes.

The integrating unit 33 may be configured to integrate the target nodes to generate a virtual node, and upload the virtual node into the document object model tree.

Since the target nodes are all static nodes and the parameter(s) of their variable functions are constant, the integrating unit 33 may integrate the target nodes to generate a virtual node, and upload the virtual node into the document object model tree. In this way, the node complexity of the document object model tree may be reduced, and the post-rendering efficiency may be improved.

In one embodiment, the integrating unit 33 may be specifically configured to render the target nodes one by one to generate multiple target components, integrate the target components to generate a virtual component, generate a virtual node based on the virtual component and upload the virtual node in to the document object model tree.

The parsing unit 34 may be configured to parse the updated document object model tree through a rendering engine to generate the native page.

Specifically, the rendering engine is in responsible of parsing the fast application and the component draw function. In one embodiment, the rendering engine may use the JavaScript language frame. JavaScript is a network script language and widely used in web application development. It usually serves to add various dynamic functions for a website and provide smooth and cosmetic browsing effect for users.

Furthermore, the parsing unit 34 may parse and render the updated document object model tree through the rendering engine on the electronic device, and draw the components one by one on a display interface to generate the native page. Since the virtual node includes a set of multiple components, it can be called only once during the parsing and rendering process executed by the parsing unit 34 to directly generate and draw multiple components. Therefore, the rendering period and communication number can be largely reduced.

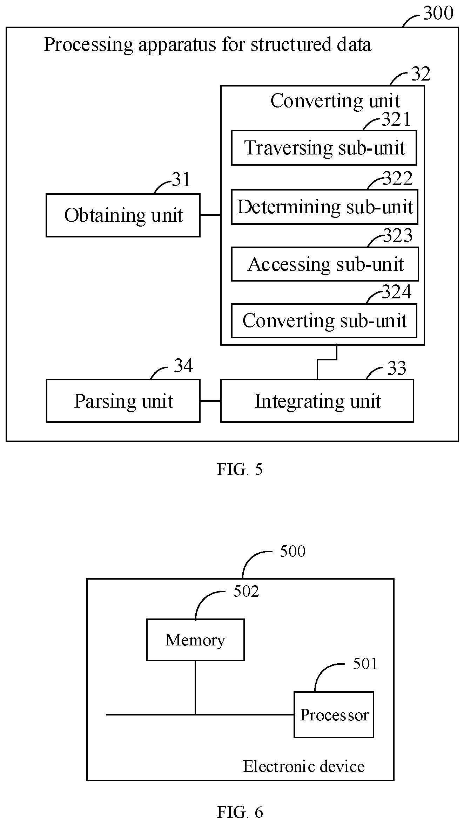

FIG. 5 illustrates a schematic diagram of a processing apparatus for structured data according to another embodiment of the present disclosure. The processing apparatus 300 may further include the following components or functions.

In this embodiment, the converting unit may include a traversing sub-unit 321, a determining sub-unit 322, an accessing sub-nit 323 and a converting sub-unit 324.

The traversing sub-unit 321 is configured to traverse the nodes of the document object model tree based on a preset rule. The determining sub-unit 322 is configured to determine whether a currently traversed node is a dynamic node. The accessing sub-unit 323 is configured to, when it is determined that the currently traversed node is the dynamic node, access sub-nodes of the currently traversed node. The converting sub-unit 324 is configured to, when it is determined that the currently traversed node is not the dynamic node, convert the currently traversed node into a target node.

In some embodiments, the converting sub-unit 324 is specifically configured to: obtain the currently traversed node and the sub-nodes of the currently traversed node; and integrate the sub-nodes of the currently traversed node into the currently traversed node, and convert integrated currently traversed node into a target node.

In some embodiments, the traversing sub-unit 321 is specifically configured to: start the traversing from a root node of the document object model tree; and traverse the nodes of the document object model tree based on a top-to-down rule.

As described above, the present disclosure provides a processing apparatus for structured data. When receiving a display instruction of a native page, the obtaining unit 31 obtains corresponding document object model tree of the native page. The converting unit 32 traverses nodes of the document object model tree and converts the static nodes into target nodes. The integrating unit 33 integrates the target nodes to generate a virtual node, and uploads the virtual node into the document object model tree. The parsing unit 34 parses the document object model tree after the virtual node is uploaded through a rendering engine to generate the native page. According to the present disclosure, the static nodes of the document object model tree which corresponds to the native page may be determined, converted and integrated to generate a virtual node which further be uploaded into the document object model tree. Therefore, the level complexity of the document object model tree may be reduced and the rendering efficiency of the structured data may be improved.

The present disclosure further provides an electronic device, as shown in FIG. 6. The electronic device 500 includes a processor 501 and a memory 502. The processor 501 and the memory 502 may be electrically connected.

The processor 500 is the control center of the electronic device 500, and can be connected to each components of the electronic device through various interfaces and circuits. The processor 500 may execute computer programs stored in the memory 502, call data stored in the memory 502, process data and execute various functions of the electronic device 500 so as to monitor and control the electronic device 500.

The memory 502 may be configured to store software programs and modules. The processor 501 execute various functions, applications and data processing by executing computer programs and modules stored in the memory 502. The memory 502 mainly includes a program storage area and a data storage area. The program storage area may store an operating system, application programs required for at least one function, and so on. The data storage area may store data (such usage parameters of an application) created according to use of the mobile phone, and so on. In addition, the memory 502 may include a high-speed RAM, and may further include a non- transitory memory such as at least one disk storage device, a flash device, or other non- transitory solid storage devices.

In the present disclosure, the processor 501 of the electronic device 500 may, according to the following operations, upload corresponding instructions corresponding to one or more computer programs to the memory 502, and execute computer programs stored in the memory 502 to achieve various functions. The operations achieved by the processor 501 may include: when receiving a display instruction of a native page, obtaining corresponding document object model tree of the native page, wherein the document object model tree includes dynamic nodes and static nodes; traversing nodes of the document object model tree and converting the static nodes into target nodes; integrating the target nodes to generate a virtual node, and uploading the virtual node into the document object model tree; and parsing the document object model tree after the virtual node is uploaded through a rendering engine to generate the native page.

In some embodiments, the document object model tree includes dynamic nodes and static nodes. When converting the static nodes into targets nodes, the processor 501 may be configured to specifically perform the following operations: traversing the nodes of the document object model tree based on a preset rule; determining whether a currently traversed node is a dynamic node; when it is determined that the currently traversed node is a dynamic node, accessing sub-nodes of the currently traversed node; and when it is determined that the currently traversed node is not a dynamic node, converting the currently traversed node into a target node.

In some embodiments, when converting the currently traversed node into a target node, the processor 501 may be specifically configured to perform the following operations: obtaining the currently traversed node and the sub-nodes of the currently traversed node; and integrating the sub-nodes of the currently traversed node into the currently traversed node, and converting the integrated currently traversed node into a target node.

In some embodiments, when traversing the nodes of the document object model tree based on the preset rule, the processor 501 may be specifically configured to perform the following operations: starting the traversing from a root node of the document object model tree, and traversing the nodes of the document object model tree based on a top-to-down rule.

In some embodiments, when traversing the nodes of the document object model tree based on the preset rule, the processor 501 may be specifically configured to perform the following operations: starting the traversing the nodes of the document object model tree; traversing the nodes of the document object model tree based on a rule according to which sibling nodes located in a same level are traversed before sibling nodes located in a lower level are traversed.

In some embodiments, when integrating the target nodes to generate a virtual node and uploading the virtual node into the document object model tree, the processor 501 may specifically be configured to perform the following operations: rendering the target nodes to generate a plurality of target components; integrating the plurality of target components to generate a virtual component, generating the virtual node based on the virtual component and uploading the virtual node into the document object model tree.

In some embodiments, before obtaining the corresponding document object model tree of the native page, the processor 501 may specifically be configured to perform the following operations: adding a specific tag, an attribute or a specific name for each of the nodes of the document object model tree as marks such that the nodes are determined as the static nodes or the dynamic nodes based on the specific tag, the attribute or the specific name.

As described above, the present disclosure provides an electronic device which may performs a processing method for structured data. The method includes: when receiving a display instruction of a native page, obtaining corresponding document object model tree of the native page; traversing nodes of the document object model tree and converting the static nodes into target nodes; integrating the target nodes to generate a virtual node, and uploading the virtual node into the document object model tree; and parsing the document object model tree after the virtual node is uploaded through a rendering engine to generate the native page. According to the present disclosure, the static nodes of the document object model tree which corresponds to the native page may be determined, converted and integrated to generate a virtual node which further be uploaded into the document object model tree. Therefore, the level complexity of the document object model tree may be reduced and the rendering efficiency of the structured data may be improved.

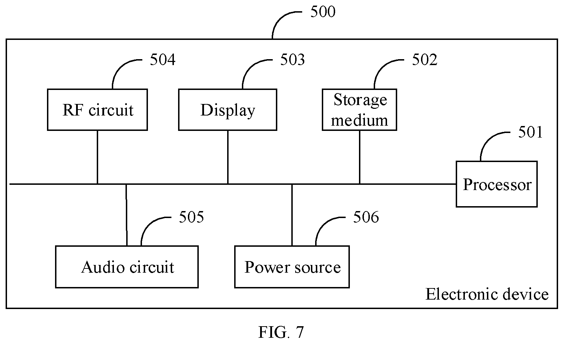

Referring to FIG. 7, in some embodiment, the electronic device 500 may further include a display 503, a radio frequency circuit (RF) 504, an audio circuit 505 and a power source 506. The display 503, radio frequency circuit 504, audio circuit 505 and power source 506 may be electrically connected to the processor 501 respectively.

The display 503 can be used to display information inputted by a user or information provided to a user, as well as various graphical user interfaces, which can be composed of graphics, text, icons, video, and any combination thereof. The display 503 may include a display panel. In some embodiments, a liquid crystal display (LCD), or an organic light emitting diode (OLED) and the like may be used to form the display panel.

The radio frequency circuit 504 can be used to transmit and receive radio frequency signals to establish wireless communication with network devices or other electronic devices through wireless communication to transmit and receive signals with network devices or other electronic devices.

The audio circuit 505 can be used to provide an audio interface between a user and an electronic device through a speaker or a microphone.

The power supply 506 can be used to power various components of the electronic device 500. In some embodiments, the power supply 506 can be logically coupled to the processor 501 through a power management system to manage functions through the power management system such as charging, discharging, and power consumption management.

Although not shown in FIG. 7, the electronic device 500 may further include a camera, a Bluetooth module, and the like, the details of which are not described herein.

A storage medium (e.g., non- transitory computer readable storage medium) is further provided in embodiments of the present disclosure. The storage medium stores a plurality of instructions, and the plurality of instructions are configured to be loaded by a processor to execute the processing method for structured data in the foregoing embodiments, for example, when receiving a display instruction of a native page, obtaining corresponding document object model tree of the native page, wherein the document object model tree includes dynamic nodes and static nodes; traversing nodes of the document object model tree and converting the static nodes into target nodes; integrating the target nodes to generate a virtual node, and uploading the virtual node into the document object model tree; and parsing the document object model tree after the virtual node is uploaded through a rendering engine to generate the native page.

In the present disclosure, the storage medium may be a diskette, CD, read only memory (ROM), and random-access memory (RAM) etc.

It is to be illustrated that, for the processing method for structured data described in the present disclosure, those skilled in the art may understand that, all or a part of procedures of the processing method for structured data may be performed by hardware, under controls of computer programs. The computer programs may be stored in a readable storage medium (such as stored in a memory), and may be executable by at least one processor to perform procedures illustrated by embodiments of the charging method. The storage medium may be a diskette, a CD, a ROM (Read Only Memory), a RAM (Random Access Memory) and the like.

In the processing apparatus for structured data according to the embodiments of the present disclosure, individual functional units may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium. The storage medium may include an ROM, an RAM, a magnet disk, an optical disk and the like.

Above is a detailed introduction of the processing method for structured data, apparatus, storage medium and electronic device provided by the embodiments of the disclosure. In this paper, specific examples are applied to elaborate the principle and implementation mode of the disclosure. The explanation of the above embodiments is only used to help understand the method of the disclosure and its core idea; Meanwhile, for technicians in the field, according to the idea of the disclosure, there will be changes in the specific implementation mode and application scope. In conclusion, the contents of this specification shall not be interpreted as restrictions on the disclosure.

## Claims

1. A processing method for structured data, comprising:
obtaining document object model tree of a native page in response to receiving a display instruction of the native page, wherein the document object model tree comprises dynamic nodes and static nodes;
traversing nodes of the document object model tree and converting the static nodes to target nodes;
generating a virtual node by integrating the target nodes, and loading the virtual node into the document object model tree; and
controlling a rendering engine to parse the loaded document object model tree and generate the native page.

2. The method of claim 1, wherein the traversing the nodes of the document object model tree and converting the static nodes into the target nodes comprises:
traversing the nodes of the document object model tree based on a preset rule;
determining whether a currently traversed node is a dynamic node or a static node;
accessing sub-nodes of the currently traversed node in response to determining the currently traversed node is the dynamic node; and
converting the currently traversed node to the target node in response to determining that the currently traversed node is the static node.

3. The method of claim 2, wherein the converting the currently traversed node to the target node comprises:
obtaining the currently traversed node and the sub-nodes of the currently traversed node; and
integrating the sub-nodes of the currently traversed node into the currently traversed node, and converting integrated currently traversed node to the target node.

4. The method of claim 2, wherein the traversing the nodes of the document object model tree based on the preset rule comprises:
starting the traversing from a root node of the document object model tree, and traversing the nodes of the document object model tree based on a top-to-down rule.

5. The method of claim 4, wherein the starting the traversing from the root node of the document object model tree and traversing the nodes of the document object model tree based on the top-to-down rule comprise:
starting the traversing from the root node of the document object model tree; and
traversing the nodes of the document object model tree based on an order of traversing sibling nodes in a same level and traversing sibling nodes in a lower level.

6. The method of claim 1, wherein the generating the virtual node by integrating the target nodes, and loading the virtual node into the document object model tree comprise:
rendering the target nodes to generate a plurality of target components;
generating a virtual component by integrating the plurality of the target components, and loading the virtual node based on the virtual component into the document object model tree.

7. The method of claim 1, prior to the obtaining document object model tree of the native page, further comprising:
adding one of a specific tag, an attribute or a specific name to each the node of the document object model tree and determining whether the node is astatic node or a dynamic node based on the specific tag, the attribute or the specific name.

8. A processing apparatus for structured data, comprising:
an obtaining unit, configured to obtain corresponding document object model tree of the native page in response to receiving a display instruction of the native page, wherein the document object model tree comprises dynamic nodes and static nodes;
a converting unit, configured to traverse nodes of the document object model tree and convert the static nodes to target nodes;
an integrating unit, configured to integrate the target nodes to generate a virtual node, and load the virtual node into the document object model tree; and
a parsing unit, configured to parse the document object model tree after the virtual node is loaded through a rendering engine to generate the native page.

9. The apparatus of claim 8, wherein the converting unit comprises:
a traversing sub-unit, configured to traverse the nodes of the document object model tree based on a preset rule;
a determining sub-unit, configured to determine whether a currently traversed node is a dynamic node or a static node;
an accessing sub-unit, configured to access sub-nodes of the currently traversed node in response to determining the currently traversed node is the dynamic node; and
a converting sub-unit, configured to convert the currently traversed node into a target node in response to determining that the currently traversed node is the static node.

10. The apparatus of claim 9, wherein the converting sub-unit is specifically configured to:
obtain the currently traversed node and the sub-nodes of the currently traversed node; and
integrate the sub-nodes of the currently traversed node into the currently traversed node, and convert integrated currently traversed node to a target node.

11. The apparatus of claim 9, wherein the traversing sub-unit is specifically configured to:
start the traversing from a root node of the document object model tree; and
traverse the nodes of the document object model tree based on a top-to-down rule.

12. The apparatus of claim 8, the apparatus further comprises:
a marking unit, configured to add one of a specific tag, an attribute or a specific name to each the node of the document object model tree and determine whether the node is astatic node or a dynamic node based on the specific tag, the attribute or the specific name

13. A non- transitory computer readable storage medium configured to store computer programs, wherein the computer programs, when executed on a computer, implements the processing method for structured data according to claim 1.

14. An electronic device comprising a memory and a processor, wherein the processor is configured to execute computer programs stored in the memory to perform following operations:
obtaining document object model tree of a native page in response to receiving a display instruction of the native page, wherein the document object model tree comprises dynamic nodes and static nodes;
traversing nodes of the document object model tree and converting the static nodes to target nodes;
generating a virtual node by integrating the target nodes, and loading the virtual node into the document object model tree; and
controlling a rendering engine to parse the loaded document object model tree and generate the native page.

15. The electronic device of claim 14, wherein the processor is further configured to execute the computer programs to perform following operations:
traversing the nodes of the document object model tree based on a preset rule;
determining whether a currently traversed node is a dynamic node or a static node;
accessing sub-nodes of the currently traversed node in response to determining the currently traversed node is the dynamic node; and
converting the currently traversed node to the target node in response to determining that the currently traversed node is the static node.

16. The electronic device of claim 15, wherein the processor is further configured to execute the computer programs to perform following operations:
obtaining the currently traversed node and the sub-nodes of the currently traversed node; and
integrating the sub-nodes of the currently traversed node into the currently traversed node, and converting integrated currently traversed node to the target node.

17. The electronic device of claim 15, wherein the processor is further configured to execute the computer programs to perform following operations:
starting the traversing from a root node of the document object model tree, and traversing the nodes of the document object model tree based on a top-to-down rule.

18. The electronic device of claim 17, wherein the processor is further configured to execute the computer programs to perform following operations:
starting the traversing from the root node of the document object model tree; and
traversing the nodes of the document object model tree based on an order of traversing sibling nodes in a same level and traversing sibling nodes in a lower level.

19. The electronic device of claim 14, wherein the processor is further configured to execute the computer programs to perform following operations:
rendering the target nodes to generate a plurality of target components;
generating a virtual component by integrating the plurality of the target components, and loading the virtual node based on the virtual component into the document object model tree.

20. The electronic device of claim 14, wherein the processor is further configured to execute the computer programs to perform following operations:
adding one of a specific tag, an attribute or a specific name to each the node of the document object model tree and determining whether the node is astatic node or a dynamic node based on the specific tag, the attribute or the specific name.
